# EUROPÄISCHE PATENTSCHRIFT

(11) **EP 1 009 603 B1**
(45) Veröffentlichungstag und Bekanntmachung des Hinweises auf die Patenterteilung: **23.07.2003**
(21) Anmeldenummer: 98930644.4
(22) Anmeldetag: 09.04.1998
(51) Int. Cl.: B28D 1/00, E04F 15/08

(54) **VERFAHREN ZUR HERSTELLUNG RUTSCHFESTER FUSSBODENBELÄGE**
METHOD FOR PRODUCING NONSLIP FLOOR COVERINGS
PROCEDE DE PRODUCTION DE REVETEMENTS DE SOL ANTIDERAPANTS

(30) Priorität: 16.04.1997 DE 19715937
(43) Veröffentlichungstag der Anmeldung: 21.06.2000
(73) Patentinhaber: Sievers, Thomas, 21379 Boltersen (DE)
(72) Erfinder: SIEVERS, Thomas, D-21379 Boltersen (DE); WIEDEMANN, Günter, D-01237 Dresden (DE)
(74) Vertreter: Pfenning, Meinig & Partner
(86) Internationale Anmeldenummer: DE9801023
(87) Internationale Veröffentlichungsnummer: WO98046405

(56) Entgegenhaltungen:
- DE-A- 2 053 110
- DE-A- 2 220 378
- DE-C- 4 235 333
- DE-C- 19 518 270
- US-A- 3 318 207
- US-A- 3 847 688
- US-A- 5 223 168
- US-A- 5 423 910

## Beschreibung

Die Erfindung betrifft ein Verfahren zur Herstellung rutschfester Fußbodenbeläge aus mineralischen Werkstoffen wie beispielsweise Naturstein, Feinsteinzeug, Kunststein oder Keramik.

Ein besonderes Anwendungsgebiet der Erfindung ist die Erhöhung bzw. Erzeugung einer rutschhemmenden Wirkung auf hochglanzpolierten Fußböden, insbesondere solcher, wie sie in öffentlichen bzw, öffentlich zugängigen Gebäuden verwendet werden sowie in denjenigen Bereichen, wo Flüssigkeiten jeglicher Art auf den Boden gelangen können.

Ausrutschen ist eine der häufigsten Unfallursachen in Deutschland. Die Schwere solcher Unfälle wird meistens unterschätzt. Zur Erhöhung der Trittsicherheit müssen Schuhsohlen und Fußböden rutschhemmend gestaltet werden. Dies ist vor allem dort notwendig, wo gleitfördernde Medien auf den Boden gelangen. In vielen Bereichen des öffentlichen Lebens aber auch im Privatbereich ist es üblich, polierte glänzende Naturstein- und Kunststeinplatten als repräsentative Fußbodenbeläge sowohl in Trocken- als auch in Naßbereichen sowie Übergangsbereichen einzusetzen. Dabei gilt es, die rutschhemmenden Eigenschaften mit der architektonischen Ästhetik in Einklang zu bringen. Die Bewertung der Rutschhemmung erfolgt nach DIN 51097 - (Bestimmung der rutschhemmenden Eigenschaft - Naßbelastete Barfußbereiche - Begehungsverfahren - Schiefe Ebene) und DIN 51130 - (Bestimmung der rutschhemmenden Eigenschaft - Arbeitsräume und Arbeitsbereiche mit erhöhter Rutschgefahr - Begehungsverfahren - Schiefe Ebene) mittels einer schiefen Ebene.

Es existieren aber auch Meßgeräte zu instationären Reibzahlmessung [Fb 701 Vergleichsuntersuchung zur instationären Reibzahlmessung auf Fußböden (Schriftenreihe der Bundesanstalt für Arbeitsschutz)].

Zur Herstellung bzw. Erhöhung der rutschhemmenden Eigenschaften von Fußböden aus Natur- und Kunststein existieren unterschiedliche Verfahren. Deren Einsatz hängt vorwiegend davon ab, wo der Bodenbelag verlegt werden soll oder schon verlegt ist (Innenbereich, Außenbereich, zu erwartender Verschmutzungsgrad u.a.). Im folgenden werden die wichtigsten Verfahren kurz beschrieben.

Beim Strahlen wird ein der gewünschten Rauheit entsprechendes Strahlgut mit hohem Druck auf die Oberfläche geschleudert. Das mehr oder weniger harte Strahlgut führt zu einer unregelmäßigen Aufrauhung und starken Mattierung der Oberfläche (DE 31 39 427).

Beim Flammstrahlen werden hochenergetische Brenngas-Sauerstoff-Flammen erzeugt, mit denen die zu behandeinde Oberfläche kurzzeitig erhitzt wird. Durch die Einwirkung der Flammen erfolgt in der obersten Gesteinszone ein Sprengen des Quarzes sowie ein Schmelzen von Gesteinsteilen, die anschließend glasartig erstarren und verhältnismäßig lose auf der Oberfläche haften (DE 35 45 064).

Das Stocken erfolgt unter Verwendung eines Stockwerkzeuges (Stockhammer), welches mit mehreren, gleichmäßig angeordneten Meißelspitzen versehen ist. Während einer kontinuierlichen Werkstückbewegung wird der Stockhammer mit einer bestimmten Frequenz auf die Oberfläche geschlagen (DE 39 33 843).

Die beschriebenen oder ähnlichen Verfahren, die Abrasivmittel bzw. meißelartige Werkzeuge benutzen, führen zwar zur Erhöhung der Trittsicherheit, aber wie auch z.B. herstellungsseitig weniger polierten Flächen zu einem erheblichen Glanzverlust und damit Minderung des ästhetischen Wertes.

Die Beschichtung von Oberflächen zur Erhöhung der Rutschfestigkeit hat zur Folge, daß die behandelte Fläche mit Noppen versehen wird (DE 33 42 266). Diese Methode bringt zwar keine Veränderung der optischen Eigenschaften mit sich, ist aber nur begrenzt haltbar, da sich ein Abrieb nicht vermeiden läßt.

Bei der chemischen Ätzbehandlung von Natursteinoberflächen werden durch die Einwirkung flußsäurehaltiger Substanzen vor allem die Feldspatanteile angegriffen (Informationsblatt des Bundesverbandes Trittsicherheit, Abteilung Öffentlichkeitsarbeit). Die Schädigung beträgt nur wenige Mikrometer, der Quarz wird weitestgehend geschont. Der Glanzverlust hängt von der Einwirkdauer ab, die Veränderung der Gesamtoptik muß an einer Probefläche getestet werden.

Dieses Verfahren ist allerdings weitestgehend auf die Anwendung auf mineralischen Bodenbelägen beschränkt Chemische Zusammensetzung und Konzentration müssen den unterschiedlichen Arten von Belägen angepaßt werden. Durch lange Einwirkzeiten sowie exakte Einhaltung der Konzentration läßt sich dieses Verfahren nicht oder nur mit sehr hohem Aufwand in den Herstellungsprozeß von Fußbodenplatten oder Fliesen integrieren. Bei unsachgemäßer Anwendung und Entsorgung der flußsäurehaltigen Substanz besteht eine erhöhte Gefährdung hinsichtlich Arbeits- und Umweltschutz.

In DE 195 18 270 bzw. WO 96/36469 wird ebenfalls ein rutschfester Fußbodenbelag und ein Verfahren zu seiner Herstellung beschrieben, wobei hier die rutschhemmende Wirkung dadurch erzielt wird, daß auf der Oberfläche des Fußbodenbelages, vorzugsweise polierte Naturstein- oder Feinsteinzeugplatten, ein dichtes Netz von Mikrokratem, die für das menschliche Auge unsichtbar sein sollen, mittels Laserstrahlung erzeugt wird. Diese Lösung stellt im Vergleich zum vorangegangenen Stand der Technik eine deutliche Verbesserung dar.

Eine Erhöhung der rutschhemmenden Wirkung jedoch, wie sie z.B. in bestimmten Naßbereichen wünschenswert ist, kann bei der Laserbestrahlung zwar durch Erhöhen der Kraterdichte und Vergrößerung der lateralen Ausdehnung und Erhöhung der Tiefe der Krater erreicht werden. Nachteilig dabei ist jedoch, daß es dann zu einer deutlichen Beeinträchtigung der optischen Eigenschaften, respektive zum Glanzverlust kommen kann. Ein weiterer Nachteil ist, daß eine Erhöhung der Kraterdichte und -abmessungen mit einer Absenkung der Prozeßgeschwindigkeit verbunden ist. Für die Erhöhung der Kraterabmessungen reicht oftmals die mit konventionellem Impulslaser erreichbare Pulsspitzenleistung nicht mehr aus.

Es ist somit Aufgabe der Erfindung, ein Verfahren zur Herstellung rutschfester Fußbodenbeläge vorzuschlagen, mit dessen Hilfe eine Erhöhung der rutschhemmenden Wirkung erreicht werden kann, ohne daß eine nachteilige Beeinträchtigung der repräsentativen Oberflächeneigenschaften einerseits und eine Senkung der Prozeßgeschwindigkeit andererseits auftreten und darüber hinaus alle Vorteile der Laserstrukturierung gegenüber anderen Methoden der rutschhemmenden Ausrüstung erhalten bleiben.

Erfindungsgemäß wird diese Aufgabe mit einem Verfahren gemäß einem oder mehreren der Ansprüche von 1 bis 28 gelöst.

Dabei ist wesentlich, daß der in bekannter Weise gemäß DE 195 18 270 bzw. Wo 96/36469 zu erhaltende rutschfeste Fußbodenbelag einer kontinuierlichen hydromechanischen Nachbehandlung unterzogen wird. Diese hydromechanische Nachbehandlung kann vorzugsweise auf der gleichen Anlage unmittelbar im Anschluß an die Laserbehandlung unter Beibehaltung der Prozeßgeschwindigkeit erfolgen, wodurch der Gesamtprozeß, der aus 2 Prozeßstufen (Laserbehandlung und hydromechanische Nachbehandlung) besteht, kontinuierlich geführt werden kann.

In bestimmten Fällen jedoch, z.B. wenn laserbehandelte Fußbodenbeläge erst am Einsatzort hydromechanisch nachbehandelt werden, kann es auch günstig sein, wenn beide Prozeßstufen getrennt, also diskontinuierlich, ablaufen.

Vorteilhafte Ausgestaltungen dieses Gesamtprozesses sind in den Patentansprüchen 2 bis 28 dargestellt.

Entsprechend dem erfindungsgemäßen Verfahren wird die laserbehandelte Oberfläche der horizontal geförderten Fußbodenbeläge bzw. Platten mindestens einmal mit einer sauren, vorzugsweise leicht sauren Flüssigkeit kurzzeitig während des kontinuierlichen Plattenvorschubes besprüht.

Nach jedem dieser Sprühvorgänge wird die Sprühflüssigkeit vorzugsweise mittels Bürsten oder einer Rakel gleichmäßig auf der Oberfläche der Fußbodenbeläge bzw. Platten verteilt und überflüssige Sprühflüssigkeit entfernt.

Vorzugsweise erfolgt diese gleichmäßige Verteilung derart, daß die Sprühflüssigkeit nur in den Vertiefungen und den durch die Laserbehandlung entstandenen Mikrokratern, nicht aber auf der polierten Oberfläche der Fußbodenbeläge bzw.

Platten verbleibt. Dabei wird die mengenmäßige Dosierung der Flüssigkeit so gewählt, daß sie etwa dem Volumen der Vertiefungen und Mikrokrater entspricht

Die Oberfläche der Krater ist infolge der Lasereinwirkung mikroskopisch sehr rauh und folglich bezogen auf das Kratervolumen sehr groß. Damit ergeben sich für die verdünnte Säure in den durch die Laserbehandlung erzeugten Kratern und in den je nach Plattenart auch trotz der Politur vorhandenen Mikroporen sehr gute Wirkbedingungen. Der PH-Wert und die Einwirkzeit der gegenüber der bei der chemotechnischen Behandlung von Fußbodenbelägen wesentlich verdünnteren Säuren werden erfindungsgemäß so gewählt , daß die polierte Oberfläche ohne Beeinträchtigung bleibt, auf Grund der guten Wirkbedingungen es aber innerhalb der Krater zu einer Anlösung von Teilen der Oberfläche und somit zu einer Vergrößerung des Volumens kommt Vorzugsweise werden diejenigen Krater vergrößert, die sich im Bereich von Feldspatanteilen der Naturstein- oder Feinsteinzeugplatten befinden,

Es ist an dieser Stelle wichtig zu erwähnen, daß die Einwirkzeit der sauren Sprühflüssigkeit von vielen Faktoren, insbesondere
- der Prozeßgeschwindigkeit,
- der Wegstrecke zwischen dem ersten und dem letzten der Reinigung von vorangegangenen Sprühvorgängen dienenden Sprühvorgangs und
- der Säurekonzentration
abhängt.

Wichtig ist, daß die Wirkung der Säure, die in vereinzelten Anwendungsfällen auch konzentriert sein kann, möglichst nur in den Vertiefungen und Mikrokratem und ohne Beeinträchtigung der restlichen polierten Oberfläche erfolgt.

Nach der hydromechanischen Bearbeitung und anschließenden kurzen, vorzugsweise zwischen 60 und 150 s dauernden Einwirkzeit der Säure in den Kratern werden die Platten erneut mit einer Flüssigkeit, hier mit möglichst hohem Druck besprüht und nochmals gebürstet. Entsprechend dem PH-Wert der ersten Flüssigkeit kann die Flüssigkeit zum völligen Neutralisieren Wasser oder auch leicht basisch (beispielsweise verdünnte Lauge) sein.

Eine vorteilhafte Ausgestaltung kann hierzu darin bestehen, daß der PH-Wert der ablaufenden Flüssigkeit kontinuierlich bestimmt und dieser Wert als Regelgröße für den PH-Wert der Spülflüssigkeit genutzt wird.

Durch die hier gegenüber der Säureverteilung mechanisch stärkeren Einwirkung der Bürsten werden gleichzeitig nicht mehr zum Kornverband der Mineralbestandteile der Fußbodenplatten gehörenden Reste aus den Kratern entfernt, die sonst zu einer Verkleinerung des möglichen Kratervolumens führen.

Nach dem Spül- bzw. Neutralisationsprozeß erfolgt eine Heißlufttrocknung der Platten.

Der große Vorteil des erfindungsgemäßen Verfahrens besteht darin, daß dadurch die Vorteile der laserstruktuierten Fußbodenbeläge bzw. Platten erhalten bleiben und die rutschhemmende Wirkung deutlich erhöht wird.

An nachfolgenden Ausführungsbeispielen soll die Erfindung näher erläutert werden.

### Ausführungsbeispiel 1

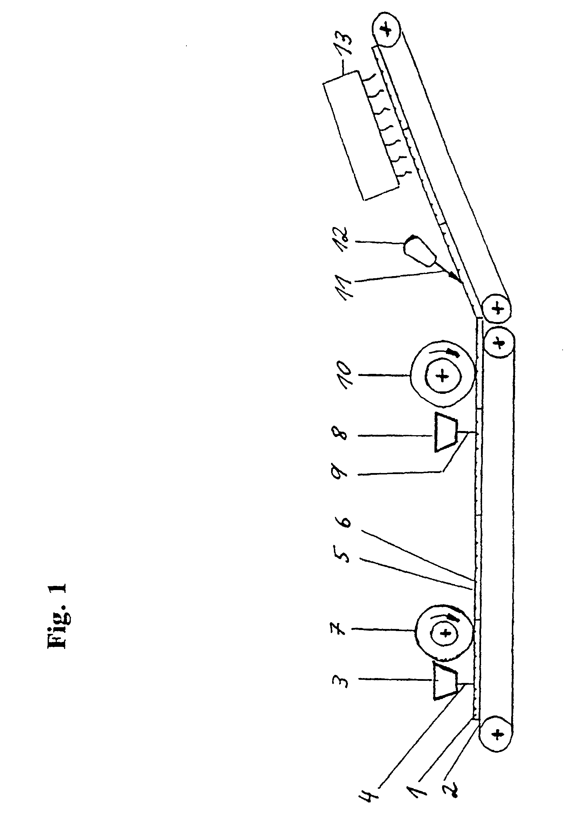

Die Verfahrensvariante gemäß Ausführungsbeispiel 1 ist in Figur 1 skizziert. Angelieferte mittels Impulslaserbeschuß rutschhemmend ausgerüstete Fußbodenplatten aus Feinsteinzeug mit den Abmessungen 60x60x1,5 cm werden auf einer Anlage entsprechend dem erfindungsgemäßen Verfahren nachbehandelt. Dabei werden die Platten 1 auf einem Transportband 2 mit einer relativ hohen Geschwindigkeit von 3 m/min bewegt. Durch einen Sprühbalken 3 wird über eine Lochdüsenreihe mit einer Breite von 58 cm eine verdünnte Flußsäure enthaltende Flüssigkeit 4 mit einer Säurekonzentration von 50 % der max. möglichen auf die polierte Plattenoberfläche 5 mit den Mikrokratern 6 aufgebracht. Im Abstand von 10 cm in Laufrichtung der Platten hinter dem Sprühbalken befindet sich eine rotierende Bürste 7 mit weichen Borsten. Die rotierende Bürste 7 verteilt die Flüssigkeit 4 gleichmäßig in die Mikrokrater 6 und in die natürlichen Vertiefungen der Platte 1 und entfernt gleichzeitig überflüssige Säure von der Oberfläche 5. In einem Abstand von 50 cm vom Sprühbalken 1 befindet sich ein zweiter Sprühbalken 8, der eine verdünnte Lauge 9 entsprechend der Konzentration der eingesetzten Säure zur Neutralisation auf die Plattenoberfläche 5 aufträgt. Analog zum Sprühbalken 3 befindet sich auch hinter dem Sprühbalken 8 eine rotierende Bürste 10, die jedoch mit höherer Drehzahl läuft und einen größeren Anpreßdruck aufweist Dadurch erfolgt neben der Verteilung und Intensivierung der Neutralisation der Sprühflüssigkeit 4 gleichzeitig eine Beseitigung der Flüssigkeiten aus den Vertiefungen und von der Plattenoberfläche. Unmittelbar hinter der Bürste 10 laufen die Platten 1 in einem Winkel von 30° schräg nach oben und entgegen der Laufrichtung wird ein Druckluftstrahl 11 in einem Winkel von 30° zur Plattenoberfläche aus einer Schlitzdüse 12 auf die Plattenoberfläche gerichtet, der noch verbliebene Flüssigkeitsreste sowohl von der Oberfläche 5 als auch aus den Mikrokratem 6 und anderen Vertiefungen entfernt. Danach erfolgt eine Nachtrocknung der Platten (z.B. Entfernen der Restfeuchte aus möglichen Porenräumen) durch eine oder mehrere Heißluftduschen 13 und der Weitertransport der Platten 1, z.B. zu einer Verpackungsstation.

### Ausführungsbeispiel 2

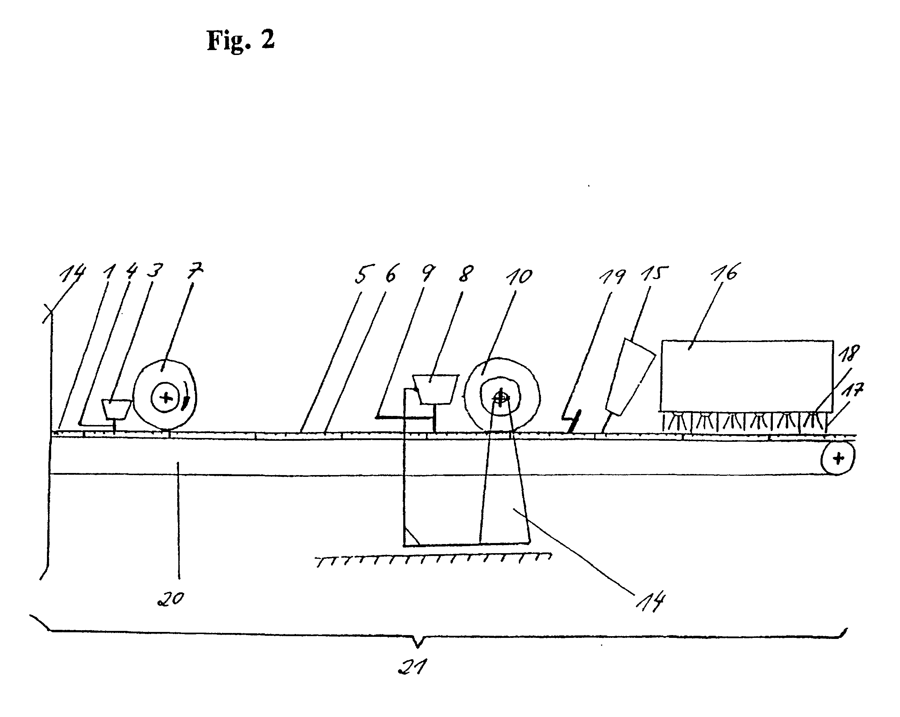

Die Verfahrensvariante gemäß Ausführungsbeispiel 2 ist in Figur 2 skizziert. Von einer Arbeitsstation 14, auf der die rutschhemmende Ausrüstung durch gezielte Erzeugung von Mikrokratern 6 durch Impulslaserbestrahlung erfolgt, gelangen die laserbehandelten Granitplatten 1 der Abmessungen 30x30x1 cm in 2 Reihen nebeneinander, d.h. mit einer Gesamtbreite von 60 cm, auf einem Transportband 20 kontinuierlich zur Nachbehandlungsstrecke 21. Die durch die Laserbehandlung technologisch bedingte Vorschubgeschwindigkeit der Platten 1 beträgt 0,6 m/min. Innerhalb der Trocknungsstrecke 16 laufen die Platten 1 zunächst unter einem Sprühbalken 3, der wiederum mit einer Lochdüsenreihe mit einer Breite von 58 cm, jedoch gegenüber dem Beispiel 1 um den Faktor 5 kleinerem Düsenlochdurchmessern ausgerüstet ist, hindurch. Hier wird eine verdünnte Flußsäure enthaltende Flüssigkeit 4 mit einer Säurekonzentration von 10 % der max, möglichen auf die polierte Plattenoberfläche 5 mit den Mikrokratern und den natürlichen Vertiefungen 6 aufgesprüht. Die aufgesprühte Gesamtmenge der Flüssigkeit 4 ist nur etwa 15 % größer als das Volumen der bereits vorhandenen Krater und Vertiefungen. In einem Abstand von ca, 15 cm in Laufrichtung hinter dem Sprühbalken 3 befindet sich eine rotierende Bürste 7 mit weichen Borsten. Die Bürstenachse ist in diesem Falle in einem Winkel 80° zur Vorschubeinrichtung angeordnet. Die rotierende Bürste verteilt die Flüssigkeit 4 gleichmäßig in die Mikrokrater und natürliche Vertiefungen 6 und entfernt die überflüssige Flüssigkeit von der Oberfläche. In einem Abstand von in diesem Falle 1 Meter zum Sprühbalken 3 befindet sich ein weiterer Sprühbalken 8, der eine entsprechend der eingesetzten Säurekonzentration und der aufgesprühten, um den Faktor 10 gegenüber der Säure höheren Menge verdünnte Lauge 9 auf die Plattenoberfläche 5 sprüht. Unmittelbar hinter dem Sprühbalken 8 befindet sich auch hier eine rotierende Bürste 10 in analoger Anordnung wie 7. Diese ist mit härteren Borsten ausgestattet, läuft mit der zehnfachen Drehzahl gegenüber der Bürste 7 und wird stärker an die Plattenoberfläche angepreßt. Sprühbalken 8 und Bürste 10 sind gemeinsam auf einer Vorrichtung 14 montiert, deren Abstand gegenüber dem Sprühbalken 3 einstelibar ist. Dies ist zur Variation der notwendigen Einwirkzeit entsprechend dem gewünschten Verstärkungsgrad der Rutschhemmung und der Berücksichtigung unterschiedlicher Plattenwerkstoffe bei vorgegebener Prozeßgeschwindigkeit erforderlich. Im Anschluß an den letzten Sprüh- und Bürstprozeß erfolgt ein nochmaliger Sprühvorgang, indem aus einer Schlitzdüse 15 Wasser mit einer mit einem Volumenstrom 10 l/min auf die Plattenoberfläche 5 gespritzt wird. Damit wird erreicht, daß eventuelle Reste des bereits neutralen Gemisches aus den Flüssigkeiten 9 und 4 und evtl. verbliebene letzte Reste mechanischer Verunreinigungen und Rückstände von der Plattenoberfläche 5 und aus den Mikrokratern und Vertiefungen 6 vollständig entfernt werden. Danach durchlaufen die Platten eine Trockenstrecke 16, wo eine Trocknung der Platten durch Anblasen mit Warmluft aus Heißluftduschen 17 und IR - Strahlung 18 erfolgt. Zwischen dem Arbeitsraum der Bürste 10 und der Schlitzdüse 15 sowie zwischen der Schlitzdüse 15 und der Trockenstrecke 16 befinden sich jeweils Kunststoffrakeln 19, die als Abstreifer für die Flüssigkeiten wirken.

Es ist selbstverständlich, daß jeweils nach den einzelnen Naßstrecken (1. u. 2. Sprühund Bürstprozeß, Sprühvorgang) die Flüssigkeiten separat aufgefangen und nachbehandelt werden und nach der entsprechenden Aufbereitung dem jeweiligen Kreislauf bzw. der Abwasserentsorgung wieder zugeführt werden.

## Patentansprüche

1. Verfahren zur Herstellung rutschfester Fußbodenbeläge bzw-Platten aus mineralischen Werkstoffen, wie z.B. Naturstein, Feinsteinzeug, Kunststein oder Keramik, in einem 2-stufigen Prozeß mittels Impulslaserbeschuß, wobei auf der Oberfläche des Fußbodenbelages durch gezielte Einwirkung von Laserimpulsen Mikrokrater mit Saugnapfwirkung, die für das menschliche Auge unsichtbar sind, statistisch verteilt erzeugt werden,
**dadurch gekennzeichnet,**
**daß** in einer zweiten Prozeßstufe die Oberfläche der so erzeugten laserstrukturierten Fußbodenbeläge bzw. Platten einer gezielten hydromechanischen Nachbehandlung unterzogen werden, dargestellt, daß die hydromechanische Nachbehandlung derart erfolgt, daß die Oberfläche der laserstrukturierten Fußbodenbeläge bzw. Platten mindestens zweimal mit Flüssigkeit besprüht wird, wobei mindestens ein Sprühvorgang dem Anlösen von Teilen der Oberfläche der Mikrokrater und damit ihrer Vergrößerung dient und der letzte Sprühvorgang der Säuberung und/oder der Neutralisierung der Oberfläche der Fußbodenbeläge oder Platten von vorhergehenden Sprühflüssigkeiten dient.

2. Verfahren nach Anspruch 1, **dadurch gekennzeichnet, daß** die hydromechanische Nachbehandlung nur in den Vertiefungen der Fußbodenbeläge bzw. Platten durchgeführt wird.

3. Verfahren nach Anspruch 2, **dadurch gekennzeichnet, daß** die hydromechanische Nachbehandlung nur in den mittels Laserimpulsen erzeugten Mikrokratern durchgeführt wird.

4. Verfahren nach einem oder mehreren der Ansprüche 1 bis 3, **dadurch gekennzeichnet, daß** nach jedem Sprühvorgang mindestens ein Prozeß abläuft, bei dem die Sprühflüssigkeit gleichmäßig auf der Oberfläche der Fußbodenbeläge bzw. Platten verteilt und überschüssige Sprühflüssigkeit von dieser Oberfläche entfernt wird, und abschließend mindestens ein Trocknungsvorgang durchgeführt wird.

5. Verfahren nach einem oder mehreren der Ansprüche 1 bis 4, **dadurch gekennzeichnet, daß** die hydromechanische Nachbehandlung derart erfolgt, daß die Oberfläche der Fußbodenbeläge bzw. Platten zweimal mit Flüssigkeiten besprüht werden, wobei der zweite Sprühvorgang der Säuberung und/oder der Neutralisierung der Oberfläche der Fußbodenbeläge und/oder Platten von der ersten Sprühflüssigkeit dient, nach dem ersten und dem zweiten Sprühvorgang je ein Prozeß abläuft, bei dem die Sprühflüssigkeit gleichmäßig auf der Oberfläche der Fußbodenbeläge bzw. Platten verteilt und überschüssige Sprühflüssigkeit von dieser Oberfläche entfernt wird und abschließend mindestens ein Trocknungsvorgang durchgeführt wird.

6. Verfahren nach einem oder mehreren der Ansprüche von 1 bis 5, **dadurch gekennzeichnet, daß** bei dem einen oder mehreren dem Anlösen und damit der Vergrößerung der Oberfläche der Mikrokrater dienenden Sprühvorgänge eine Säure als Sprühflüssigkeit eingesetzt wird.

7. Verfahren nach Anspruch 6, **dadurch gekennzeichnet, daß** als Säure eine anorganische Säure eingesetzt wird.

8. Verfahren nach Anspruch 7, **dadurch gekennzeichnet, daß** als Säure eine Halogen-Wasserstoff-Säure eingesetzt wird.

9. Verfahren nach Anspruch 8, **dadurch gekennzeichnet, daß** als Säure Flußsäure (HF-Säure) eingesetzt wird.

10. Verfahren nach einem oder mehreren der Ansprüche von 6 bis 9, **dadurch gekennzeichnet, daß** die eingesetzte Säure eine verdünnte Säure ist.

11. Verfahren nach Anspruch 10, **dadurch gekennzeichnet, daß** die eingesetzte Säure in einer wäßrigen Lösung mit einer Konzentration von max. 50 % ihrer Maximalkonzentration in Wasser vorliegt.

12. Verfahren nach Anspruch 11, **dadurch gekennzeichnet, daß** die eingesetzte Säure in einer wäßrigen Lösung mit einer Konzentration von max. 10 % ihrer Maximalkonzentration in Wasser vorliegt.

13. Verfahren nach einem oder mehreren der Ansprüche 1 bis 12, **dadurch gekennzeichnet, daß** der letzte Sprühvorgang so durchgeführt wird, daß die Flüssigkeit der vorangegangenen Sprühvorgänge neutralisiert wird.

14. Verfahren nach Anspruch 13, **dadurch gekennzeichnet, daß** die Sprühflüssigkeit des letzten Sprühvorganges neutral oder basisch ist.

15. Verfahren nach Anspruch 14, **dadurch gekennzeichnet, daß** der pH-Wert der Sprühflüssigkeit des letzten Sprühvorganges max. pH 9 beträgt.

16. Verfahren nach Anspruch 15, **dadurch gekennzeichnet, daß** die Sprühflüssigkeit des letzten Sprühvorganges Wasser (pH-Wert = 7) ist, wobei die verwendete Menge Wasser größer ist als die Menge Sprühflüssigkeit des unmittelbar vorangegangenen Sprühprozesses.

17. Verfahren nach einem oder mehreren der Ansprüche von 1 bis 16, **dadurch gekennzeichnet, daß** nach dem letzten Sprühvorgang ein Prozeß durchgeführt wird, mit dessen Hilfe die Sprühflüssigkeit des letzten Sprühprozesses rückstandsfrei von der Oberfläche, den Vertiefungen und den Mikrokratern der Oberfläche der Fußbodenbeläge bzw. Platten entfernt wird.

18. Verfahren nach Anspruch 17, **dadurch gekennzeichnet, daß** die Sprühflüssigkeit des letzten Sprühvorganges mittels eines Gasstroms, der durch hohen Druck und/oder hohe Strömungsgeschwindigkeit charakterisiert ist, von der Oberfläche der Fußbodenbeläge bzw. Platten entfernt wird.

19. Verfahren nach einem oder mehreren der Ansprüche von 1 bis 18, **dadurch gekennzeichnet, daß** mit Ausnahme des letzten Sprühvorganges der Prozeß zur gleichmäßigen Verteilung der jeweiligen Sprühflüssigkeit auf der Oberfläche der Fußbodenbeläge bzw. Platten so geführt wird, daß die jeweilige Sprühflüssigkeit nur in den Vertiefungen bzw. Mikrokratern, naciht aber auf der restlichen polierten Oberfläche verbleibt.

20. Verfahren nach Anspruch 19, **dadurch gekennzeichnet, daß** mit Ausnahme des letzten Sprühvorganges die Verteilung der jeweiligen Sprühflüssigkeit und die Entfernung der überflüssigen Sprühflüssigkeit mittels eines Bürstprozesses und/oder einer Rakel erfolgt.

21. Verfahren nach Anspruch 20, **dadurch gekennzeichnet, daß** im Falle des Bürstenprozesses rotierende Bürsten mit weichen Borsten, geringer Drehzahl und geringem Anpreßdruck eingesetzt werden.

22. Verfahren nach einem oder mehreren der Ansprüche von 1 bis 21, **dadurch gekennzeichnet, daß** nach dem letzten Sprühvorgang der Prozeß zur gleichmäßigen Verteilung der Sprühflüssigkeit bzw. ihr Gemisch mit der/den vorangegangenen Sprühflüssigkeiten gänzlich von der polierten Oberfläche der Fußbodenbeläge bzw. Platten und den Vertiefungen und Mikrokratern entfernt wird, wobei für diesen Fall die Verfahrensschritte gemäß Anspruch 17 oder 18 entfallen können.

23. Verfahren nach Anspruch 22, **dadurch gekennzeichnet, daß** eine gleichmäßige Verteilung mittels eines Bürstenprozesses erfolgt.

24. Verfahren nach Anspruch 23, **dadurch gekennzeichnet, daß** rotierende Bürsten, hoher Drehzahl und relativ hohem Anpreßdruck eingesetzt werden.

25. Verfahren nach einem oder mehreren der Ansprüche von 4 bis 24, **dadurch gekennzeichnet, daß** die abschließende Trocknung mittels Heißluftduschen erfolgt.

26. Verfahren nach Anspruch 25, **dadurch gekennzeichnet, daß** die Heißluftduschen mit der erwärmten und gefilterten Abluft von Absaugeinrichtungen des Impulslaserprozesses der ersten Verfahrensstufe gespeist werden.

27. Verfahren nach einem oder mehreren der Ansprüche von 1 bis 26, **dadurch gekennzeichnet, daß** das gesamte Verfahren in der ersten und der zweiten Prozeßstufe kontinuierlich in einer Anlage geführt wird, wobei
für diesen Fall die Geschwindigkeit des Gesamtprozesses bzw. die Durchlaufgeschwindigkeit der Fußbodenbeläge bzw. Platten durch den Gesamtprozeß bzw. die Gesamtanlage, einschließlich der Einwirkzeit der jeweiligen Sprühflüssigkeiten auf die Fußbodenbeläge bzw. Platten von der Geschwindigkeit der ersten Prozeßstufe (Laserbehandlung) bestimmt wird, und
daß mit Ausnahme des letzten Sprühvorganges für diesen Fall starke unverdünnte Säuren als Sprühflüssigkeit eingesetzt werden und die Sprühflüssigkeit des letzten Sprühvorganges diesem angepaßt ist.

28. Verfahren nach einem oder mehreren der Ansprüche 1 bis 27, **dadurch gekennzeichnet, daß** der pH-Wert der aus dem letzten Sprühvorgang abfließenden Flüssigkeit gemessen und als Regelgröße für die Basizität der letzten Sprühflüssigkeit genutzt wird.

## Claims

1. Method for producing nonslip floor covering such as slabs from mineral materials such as for example natural stone, fine stoneware, artificial stone or ceramics with the aid of a two-stage process and targeted pulsed laser bombardment, whereby micro-craters which cause a suction effect and which are invisible to the human eye are created and statistically distributed on the surface of the floor covering, **characterised in that** the surface of the laser-structured floor covering, i.e. floor covering slabs that are created during the second process step, are further subjected to a targeted hydromechanical post-treatment, **characterised in that** the same hydromechanical post-treatment is carried out in such a way that the surface of the laser-structured floor covering, i.e. that of the slab will be sprayed with liquid at least twice, whereby at least one of the spray processes serves for the loosening of particles from the surface of the micro-craters and therefore their enlargement, and whereby the last spray process serves to clean and/or neutralise previous spray liquids from the surface of the floor covering or slabs.

2. Method according to Claim 1, **characterised in that** the hydromechanical post-treatment is applied only to the recesses of the floor covering, i.e. slabs.

3. Method according to Claim 2, **characterised in that** the hydromechanical post-treatment is applied only to the micro-craters that have previously been created with the aid of pulsed laser bombardment.

4. Method according to one or more of the preceding Claims 1 to 3, **characterised in that** at least one process during which the spray liquid is distributed evenly on the surface of the floor covering, i.e. slabs follows each spraying process, and whereby surplus spray liquid is removed from the said surface and whereby subsequently at least one drying process is carried out.

5. Method according to one or more of the preceding Claims 1 to 4, **characterised in that** the hydromechanical post-treatment is carried out in such a way that the surface of the floor covering, i.e. slabs are twice sprayed with liquid, whereby the second spraying process serves to clean and/or neutralise previous spray liquids from the surface of the floor covering and/or slabs after the first and the second spray process has been completed, during which the spray liquid is evenly distributed on the surface of the floor covering, i.e. slabs, and whereby surplus spray liquid is removed from the said surface and where subsequently at least one drying process is carried out.

6. Method according to one or more of the preceding Claims 1 to 5, **characterised in that** during one or more of the spraying processes that serve for the loosening and therefore the enlarging of the surface of the micro-craters an acid is used as the spray liquid.

7. Method according to Claim 6, **characterised in that** the said acid that is used consists of an anorganic acid.

8. Method according to Claim 7, **characterised in that** the said acid that is used consists of a halogen-hydrogen acid.

9. Method according to Claim 8, **characterised in that** the said acid that is used consists of fluoride acid (HF acid).

10. Method according to one or more of the preceding Claims 6 to 9, **characterised in that** the said acid that is used consists of a diluted acid.

11. Method according to Claim 10, **characterised in that** the said acid that is used is present within a solution with a concentration of max. 50% of its maximum concentration in water.

12. Method according to Claim 11, **characterised in that** the said acid that is used is present within an aqueous solution with a concentration of max. 10% of its maximum concentration in water.

13. Method according to one or more of the preceding Claims 1 to 12, **characterised in that** the final spraying process is carried out in such a way that the liquid of the previous spraying processes is neutralised.

14. Method according to Claim 13, **characterised in that** the spray liquid of the final spraying process consists of a neutral or base liquid.

15. Method according to Claim 14, **characterised in that** the pH value of the spray liquid of the final spraying process is a maximum of pH 9.

16. Method according to Claim 15, **characterised in that** the spray liquid of the final spraying process consists of water (pH value = 7), whereby the applied quantity of water is larger than the quantity of spray liquid of the spraying process that immediately preceded the same application.

17. Method according to one or more of the preceding Claims 1 to 16, **characterised in that** a further process is carried out following the final spraying process, whereby the said further process removes the spray liquid of the previous process without leaving a residual either on the surface, within the recesses, or in the micro-craters of the surface of the floor covering, i.e. slabs.

18. Method according to Claim 17, **characterised in that** the spray liquid of the final spraying process is removed from the surface of the floor covering, i.e. slabs with the aid of a gas stream that is applied at high pressure and/or high velocity.

19. Method according to one or more of the preceding Claims 1 to 18, **characterised in that** with the exception of the final spraying process the process for the even distribution of the relevant spray liquids on the surface of the floor covering, i.e. slabs is carried out in such a way that the relevant spray liquid remains only in the recesses, i.e. the micro-craters, and not on the rest of the polished surface.

20. Method according to Claim 19, **characterised in that** with the exception of the final spraying process the distribution of the relevant spray liquid and the removal of the surplus spray liquid is carried out with the aid of a brushing process and/or a rake.

21. Method according to Claim 20, **characterised in that** in the case of the brushing process rotating brushes with soft bristles, a low rotational speed and a low application pressure are used.

22. Method according to one or more of the preceding Claims 1 to 21, **characterised in that** the process for the even distribution of the spray liquid, i.e. the mixture consisting of the same and the previous spray liquids is removed completely from the polished surface of the floor covering, i.e. slabs as well as from the recesses and the micro-craters following the final spraying process, whereby the process steps according to Claim 17 or 18 can be omitted in this case.

23. Method according to Claim 22, **characterised in that** an even distribution is achieved with the aid of a brushing process.

24. Method according to Claim 23, **characterised in that** rotating brushes with a high rotation speed and a relatively high application pressure are used.

25. Method according to one or more of the preceding Claims 4 to 24, **characterised in that** the final drying process is carried out with the aid of hot air showers.

26. Method according to Claim 25, **characterised in that** the hot air showers are supplied with the heated and filtered exhaust air routed from the exhaust mechanism of the pulsed laser process of the first process step.

27. Method according to one or more of the preceding Claims 1 to 26, **characterised in that** the entire process is carried out during the first and the second process step continuously within a single system, whereby the speed of the entire process, i.e. the processing speed with which the floor covering, i.e. slabs travel through the entire process, i.e. the entire system in this case is determined by the soaking time of the individual spray liquids into the floor covering, i.e. slabs during the first process step (laser treatment), and **in that** with the exception of the final spraying process strong undiluted acids are used as the spray liquid of the final spraying process in this case, and **in that** the spray liquid of the final spraying process is adjusted accordingly.

28. Method according to one or more of the preceding Claims 1 to 27, **characterised in that** the pH value of the liquid drained from the final spraying process is measured and used as a control value for the base characteristics of the final spray liquid.

## Revendications

1. Procédé pour fabriquer des revêtements de sol ou des carreaux antidérapants formés de matériaux minéraux, comme par exemple de la pierre naturelle, un grés-cérame fin, une pierre artificielle ou une céramique, selon un processus en deux étapes au moyen d'un impact de laser à impulsions, selon lequel on forme d'une manière répartie de façon statistique, sur la surface du revêtement de sol, au moyen d'un action ciblée d'impulsions laser, des microcratères avec une action de ventouse, qui sont invisibles pour l'oeil humain, **caractérisé en ce que** lors d'une seconde étape opératoire, on soumet la surface des revêtements de sol ou des carreaux ainsi formés, structurés par laser, à un post-traitement hydromécanique ciblé, que le post-traitement hydromécanique s'effectue par le fait qu'on pulvérise au moins deux fois un liquide sur la surface des revêtements de sol ou des carreaux structurés par laser, au moins un processus de pulvérisation servant à faire démarrer la disposition de parties de la surface des microcratères et par conséquent leur grandissement, et le dernier processus de pulvérisation servant au nettoyage et/ou à la neutralisation de la surface des revêtements de sol ou des carreaux à l'égard des liquides de pulvérisation précédents.

2. Procédé selon la revendication 1, **caractérisé en ce que** le post-traitement hydromécanique est exécuté uniquement dans les renfoncements des revêtements de sol ou des carreaux.

3. Procédé selon la revendication 2, **caractérisé en ce que** le post-traitement hydromécanique est exécuté uniquement dans les microcratères produits au moyen d'impulsions laser.

4. Procédé selon une ou plusieurs des revendications 1 à 3, **caractérisé en ce qu'**après chaque opération de pulvérisation, on met en oeuvre au moins un processus, lors duquel le liquide de pulvérisation est réparti d'une manière uniforme sur la surface des revêtements de sol ou des carreaux et que le liquide de pulvérisation en excès est éliminé de cette surface, et pour terminer on exécute au moins une opération de séchage.

5. Procédé selon une ou plusieurs des revendications 1 à 4, **caractérisé en ce que** le traitement hydromécanique s'effectue de telle sorte qu'on pulvérise deux fois la surface des revêtements de sol ou des carreaux avec des liquides, la seconde opération de pulvérisation servant au nettoyage et/ou à la neutralisation de la surface des revêtements de sol et/ou des carreaux à l'égard du premier liquide de pulvérisation, et qu'après les première et seconde opérations de pulvérisation, on exécute respectivement un processus, lors duquel on répartit uniformément le liquide de pulvérisation sur la surface des revêtements de sol ou des carreaux et on élimine le liquide de pulvérisation en excès à partir de cette surface, et pour terminer on exécute au moins une opération de séchage.

6. Procédé selon une ou plusieurs des revendications 1 à 5, **caractérisé en ce que** lors de l'unique ou de la pluralité d'opérations de pulvérisation utilisées pour faire démarrer la dissolution et de ce fait accroître la taille de la surface des microcratères, on utilise un acide en tant que liquide de pulvérisation.

7. Procédé selon la revendication 6, **caractérisé en ce qu'**on utilise comme acide un acide minéral.

8. Procédé selon la revendication 7, **caractérisé en ce qu'**on utilise comme acide un acide d'halogène hydrogéné.

9. Procédé selon la revendication 8, **caractérisé en ce qu'**on utilise comme acide, de l'acide fluorhydrique (acide HF).

10. Procédé selon une ou plusieurs des revendications 6 à 9, **caractérisé en ce que** l'acide utilisé est un acide dilué.

11. Procédé selon la revendication 10,
**caractérisé en ce que** l'acide utilisé est présent dans une solution aqueuse avec une concentration égale au maximum à 50 % de sa concentration maximale dans l'eau.

12. Procédé selon la revendication 11,
**caractérisé en ce que** l'acide utilisé est présent en une solution aqueuse avec une concentration égale au maximum à 10 % de la concentration maximale dans l'eau.

13. Procédé selon une ou plusieurs des revendications 1 à 12, **caractérisé en ce que** la dernière opération de pulvérisation est exécutée de telle sorte qu'on neutralise le liquide des opérations de pulvérisation précédentes.

14. Procédé selon la revendication 13,
**caractérisé en ce que** le liquide de pulvérisation de la dernière opération de pulvérisation est neutre ou basique.

15. Procédé selon la revendication 14,
**caractérisé en ce que** la valeur du pH du liquide de pulvérisation de la dernière opération de pulvérisation est égale au maximum à pH 9.

16. Procédé selon la revendication 15,
**caractérisé en ce que** le liquide de pulvérisation de la dernière opération de pulvérisation est de l'eau (valeur du pH = 7), la quantité utilisée d'eau étant supérieure à la quantité de liquide de pulvérisation du processus de pulvérisation immédiatement précédent.

17. Procédé selon une ou plusieurs des revendications 1 à 16, **caractérisé en ce qu'**après la dernière opération de pulvérisation, on met en oeuvre un processus, à l'aide duquel on élimine le liquide de pulvérisation du dernier processus de pulvérisation, sans aucun résidu, de la surface, des renfoncements et des microcratères de la surface des revêtements de sol ou des carreaux.

18. Procédé selon la revendication 17,
**caractérisé en ce qu'**on élimine de la surface des revêtements de sol ou des carreaux le liquide de pulvérisation de la dernière opération de pulvérisation à l'aide d'un courant de gaz, qui est **caractérisé par** une pression élevée et/ou une vitesse d'écoulement élevée.

19. Procédé selon une ou plusieurs des revendications 1 à 18, **caractérisé en ce qu'**à l'exception de la dernière opération de pulvérisation, on met en oeuvre le processus de répartition uniforme du liquide de pulvérisation respectif sur la surface des revêtements de sol ou des carreaux de telle sorte que le liquide de pulvérisation respectif subsiste uniquement dans les renfoncements ou dans les microcratères et pas sur le reste de la surface polie.

20. Procédé selon la revendication 19,
**caractérisé en ce qu'**à l'exception de la dernière opération de pulvérisation, la répartition du liquide de pulvérisation respectif et l'élimination du liquide de pulvérisation en excès sont exécutées à l'aide d'un processus utilisant des brosses et/ou à l'aide d'une racle.

21. Procédé selon la revendication 20,
**caractérisé en ce que** dans le cas du processus utilisant des brosses on utilise des brosses rotatives comportant des poils souples, avec une faible vitesse de rotation'et une faible pression d'application.

22. Procédé selon une ou plusieurs des revendications 1 à 21, **caractérisé en ce qu'**après la dernière opération de pulvérisation, on met en oeuvre le processus de répartition uniforme du liquide de pulvérisation ou de son mélange avec le ou les liquides de pulvérisation précédents, qu'on élimine entièrement de la surface polie des revêtements ou des carreaux et des renfoncements et des microcratères, et dans ce cas on peut supprimer les étapes opératoires conformes à la revendication 17 ou 18.

23. Procédé selon la revendication 22,
**caractérisé en ce qu'**une répartition uniforme est réalisée à l'aide d'un processus utilisant des brosses.

24. Procédé selon la revendication 23,
**caractérisé en ce qu'**on utilise des brosses rotatives, avec une vitesse de rotation élevée et une pression d'application relativement élevée.

25. Procédé selon une ou plusieurs des revendications 4 à 24, **caractérisé en ce que** le séchage terminal est exécuté à l'aide de buses de projection d'air chaud.

26. Procédé selon la revendication 25,
**caractérisé en ce que** les buses de projection d'air chaud sont alimentées par l'air d'évacuation chauffé et filtré, provenant de dispositifs d'aspiration utilisés dans le processus à laser à impulsions de la première étape opératoire.

27. Procédé selon une ou plusieurs des revendications 1 à 26, **caractérisé en ce que** l'ensemble du procédé dans les première et seconde étapes opératoires est exécuté continûment dans une installation, et
dans ce cas la vitesse de l'ensemble du processus ou la vitesse de circulation des revêtements de sol ou des carreaux dans l'ensemble du processus ou à travers l'ensemble de l'installation, y compris la durée d'action du liquide respectif de pulvérisation sur les revêtements de sol ou sur les carreaux, est déterminée par la vitesse du premier étage de traitement (traitement par laser), et
qu'à l'exception de la dernière opération de pulvérisation, pour ce cas on utilise des acides forts non dilués en tant que liquide de pulvérisation et qu'on adapte le liquide de pulvérisation de la dernière opération de pulvérisation à cette dernière.

28. Procédé selon une ou plusieurs des revendications 1 à 27, **caractérisé en ce qu'**on mesure la valeur du pH du liquide qui s'évacue lors de la dernière opération de pulvérisation et qu'on l'utilise comme grandeur de régulation pour la basicité du dernier liquide de pulvérisation.
